(19) Europäisches Patentamt
European Patent Office
Office européen des brevets

(11) Veröffentlichungsnummer : **0 028 812**
**B1**

(12) # EUROPÄISCHE PATENTSCHRIFT

(45) Veröffentlichungstag der Patentschrift : **16.02.83**

(51) Int. Cl.³ : **C 08 F 14/06**, C 08 F 2/20

(21) Anmeldenummer : **80106839.6**

(22) Anmeldetag : **06.11.80**

(54) **Verfahren zur Herstellung von Polyvinylchlorid hoher Schüttdichte nach dem Suspensionsverfahren und seine Verwendung.**

(30) Priorität : **08.11.79 DE 2945073**

(43) Veröffentlichungstag der Anmeldung : **20.05.81 Patentblatt 81/20**

(45) Bekanntmachung des Hinweises auf die Patenterteilung : **16.02.83 Patentblatt 83/07**

(84) Benannte Vertragsstaaten : **AT BE CH DE FR GB IT LI NL**

(56) Entgegenhaltungen :
**DE A 2 252 340**
**US A 3 004 013**

(73) Patentinhaber : **WACKER-CHEMIE GMBH**
**Prinzregentenstrasse 22**
**D-8000 München 22 (DE)**

(72) Erfinder : **Bauer, Johann, Dr. Dipl.-Chem.**
**Görresstrasse 3**
**D-8263 Burghausen (DE)**.
Erfinder : **Thyret, Helmut, Dr. Dipl.-Chem.**
**Haydn Strasse 4**
**D-8263 Burghausen (DE)**
Erfinder : **Balwé, Thomas, Dr. Dipl.-Chem.**
**Moosbrunnerstrasse 30**
**D-8263 Burghausen (DE)**
Erfinder : **Huber, Peter, Dr. Dipl.-Chem.**
**Gluckstrasse 39**
**D-8263 Burghausen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 028 812 B1

Jouve, 18, rue St-Denis, 75001 Paris, France

# Verfahren zur Herstellung von Polyvinylchlorid hoher Schüttdichte nach dem Suspensionsverfahren und seine Verwendung

Bei der Verarbeitung von Polyvinylchlorid (PVC) wird im allgemeinen zwischen Hart- und Weichverarbeitung unterschieden. Bei der Weichverarbeitung werden dem PVC größere Mengen Weichmacher zugesetzt, wobei man mehr oder weniger flexible Artikel wie Schläuche, Elektroisolierungen, Weichfolien usw. erhält. Entscheidend für diese Verarbeitung ist die leichte und gleichmäßige Aufnahme des Weichmachers durch das PVC, ohne daß Teile des Kunststoffes keinen Weichmacher aufnehmen. Solche weichmacherfreien Stellen erzeugen die sog. Fischaugen oder Stippen. Die Aufnahme des Weichmachers wird begünstigt und beschleunigt durch eine gewisse Porosität der PVC-Teilchen. Die Porosität setzt aber gleichzeitig die Dichte, gemessen als Schüttgewicht (Schüttdichte), des PVC-Korns herab.

Typische Werte für die Schüttdichte eines für die Weichverarbeitung geeigneten Polyvinylchlorids sind 0,4 bis 0,5 g/cm$^3$.

Demgegenüber ist für die Hartverarbeitung zur Herstellung von Formkörpern, z. B. für die Extrusion zu Rohren, Platten und Profilen, ein hohes Schüttgewicht, gutes Fließverhalten und gute Verarbeitbarkeit erwünscht, da erst hierdurch ein hoher Ausstoß gewährleistet ist.

Auf diese Aufgabe ist der Gegenstand der vorliegenden Erfindung gerichtet.

Es sind bereits vielfach Verfahren vorgeschlagen worden, die ein in Suspension hergestelltes PVC hoher Schüttdichte ergeben sollen.

Bei der Suspensionspolymerisation wird Vinylchlorid unter Druck meistens in Wasser unter kräftigem Rühren, im allgemeinen mit Rührerumfangsgeschwindigkeiten von 8-9 m/s unter Zusatz monomerlöslicher Initiatoren, die bei Erhöhung der Temperatur in Radikale zerfallen, dispergiert und anschließend radikalisch polymerisiert. Zur Stabilisierung der Dispersion werden Schutzkolloide und gegebenenfalls zusätzlich Emulgatoren zugesetzt. Beispiele für Schutzkolloide sind Cellulosederivate und Verseifungsprodukte von Polyvinylacetat-(Co)-polymeren.

Die Schüttdichte eines solchermaßen hergestellten PVC kann durch die Wahl geeigneter Schutzkolloide gesteuert werden.

Beispielsweise wird, wie in der JP-PS 69 15 785 vorgeschlagen, durch Zusatz von Polyvinylpyrrolidon als Schutzkolloid ein Schüttgewicht bis zu 0,53 g/cm$^3$ erreicht, nach der DE-OS 22 34 038 durch Verwendung einer Kombination von Aminoäthyl-hydroxypropyl- und Hydroxyäthylcellulose sogar bis zu 0,58 g/cm$^3$.

Die DE-AS 22 52 340 wiederum erreicht PVC-Produkte hoher Schüttgewichte dadurch, daß Vinylchlorid in Gegenwart eines speziellen wasserlöslichen Cellulosederivats und eines speziellen Alkalimetallsalzes der Phosphorsäure, der Pyrophosphorsäure, der Essigsäure, der Kohlensäure und der Borsäure unter bestimmten Rührbedingungen in Suspension polymerisiert wird. Die bestimmten Rührbedingungen bestehen darin, daß die Umfangsgeschwindigkeit des Rührers höchstens 7 m/s beträgt, wobei das Verhältnis von Rührer- zu Autoklavendurchmesser 0,3 bis 0,8 beträgt. Nach diesem Verfahren lassen sich Schüttdichten des PVC bis 0,66 g/cm$^3$ erzielen.

Es wird in der DE-AS 22 52 340 ausdrücklich festgestellt, daß allein beim Einsatz der genannten Cellulosederivate die gestellte Aufgabe, ein durch Suspensionspolymerisation hergestelltes PVC hoher Schüttdichte zu erzeugen, gelöst werden könne, und daß die Verwendung anderer wasserlöslicher Polymerisate wie von Polyvinylalkohol, teilweise verseiftem Polyvinylalkohol und Gelantine als Schutzkolloid auch bei Einhaltung der anderen Reaktionsbedingungen nicht das gewünschte Polyvinylchlorid entsprechend der gestellten Aufgabe ergebe.

Gegenstand der Erfindung ist ein Verfahren zur Herstellung von Polyvinylchlorid hoher Schüttdichte nach dem Suspensionspolymerisations-Verfahren

a) in Gegenwart von 0,01 bis 3 Gew.-% monomerlöslichen Radikal-initiator und von Schutzkolloid unter höchstens autogenem Vinylchloriddruck im Autoklaven bei pH-Werten zwischen 3 und 8

b) unter Rühren bei einer Rührerumfangsgeschwindigkeit von höchstens 7,4 m/s gegebenenfalls in Gegenwart von Alkalisalzen und gegebenenfalls in Gegenwart weiterer üblicher Zusatzstoffe wie Emulgatoren,

dadurch gekennzeichnet, daß Vinylchlorid

c) in Gegenwart von 0,05 bis 1 Gew.-% wasserlöslichem Polyvinylalkohol mit einem Hydrolysegrad von 80 bis 90 Mol % und einer Viskosität von 15 bis 50 mPas, gemessen in 4 Gew.-%iger wässriger Lösung bei 20 °C mit dem Höppler-Kugelfallviskosimeter, wobei die genannten Mengen sich auf das Gewicht an eingesetztem Monomeren beziehen, polymerisiert wird.

Durch die Kombination dieser an sich bekannten Maßnahmen (a-c) konnte nun überraschenderweise die gestellte Aufgabe gelöst werden. Die dabei entstehenden Polymerisate des Vinylchloridsbesitzen im allgemeinen K-Werte nach Fikentscher von 60 bis 75 und Schüttdichten von 0,6 bis 0,7 g/cm$^3$. Außerdem zeigen die aus den Polymerisaten hergestellten Produkte verbessertes Kältebruchverhalten. Die Kältebruchtemperaturen liegen im allgemeinen bei − 3 bis − 8 °C.

Alle zur Suspensionspolymerisation für Vinylchlorid verwendbaren monomerlöslichen Polymerisationskatalysatoren können auch im Rahmen dieses Verfahrens verwendet werden. Als Beispiele für solche Katalysatoren seien genannt : Die Arylperoxide, die Acylperoxide, wie Acetyl-, Acetylbenzoyl-, Dilauroyl-, Bis-2,4-dichlorbenzoylperoxid, die Alkylperoxide, wie Di-tertiärbutylperoxid, Perester wie sec-Butylperacetat, Tertiär-butylperacetat, Tertiär-butylperoctoat, Tertiär-butylperpivalat, die Alkylperoxydicarbonate, Diisopropyl-, Diäthylhexyl-, Dicyclohexyl-, Dialkylcyclohexylperoxydicarbonat, gemischte Anhydride von organischen Sulfopersäuren und organischen Säuren wie Acetylcyclohexylsulfonidperoxid, sowie als Polymerisationskatalysatoren bekannte Verbindungen wie Azoiso buttersäuredinitril und Boralkyle. Die Katalysatoren können einzeln oder im Gemisch angewandt werden. Sie werden im allgemeinen in Mengen von 0,1 bis 0,3 Gewichtsprozent, bezogen auf das Monomere, eingesetzt.

Als Schutzkolloid wird ein wasserlöslicher Polyvinylalkohol oder ein wasserlösliches teilweise verseiftes Polyvinylacetat mit Viskositäten von 15 bis 50 mPas, vorzugsweise 20 bis 45 mPas, gemessen in 4 Gew.-%iger wässriger Lösung bei 20 °C mit dem Höppler-Kugelfallviskosimeter, verwendet. Der Polyvinylalkohol (mit diesem Begriff wird auch das vorstehend definierte teilweise verseifte Polyvinylacetat bezeichnet) hat einen Hydrolysegrad von 80 bis 90 Molprozent, entsprechend einer Verseifungszahl von etwa 116 bis 214 mg Kaliumhydroxid pro Gramm Polyvinylalkohol, und einen Restvinylacetatgehalt von etwa 17 bis 33 Gew.-%. Vorzugsweise besitzt er einen Hydrolysegrad von 82 bis 88 Mol.-%.

Das Schutzkolloid wird in einer Konzentration von 0,05 bis 1 Gew.-%, bezogen auf Monomeres, eingesetzt und kann als solches, vorzugsweise jedoch in wässriger Lösung in das Reaktionsgefäß gegeben werden.

In einer besonderen Ausführungsform kann dem Polymerisationsgemisch zusätzlich nichtionischer Emulgator im allgemeinen in einer Menge von 0,01 bis 0,3 Gew.-%, bezogen auf das Monomere, zugesetzt werden. Geeignet für das erfindungsgemäße Verfahren sind Polyalkoholalkylcarbonsäureester, Polysiloxanpolyoxyalkylen-Blockcopolymere und Polyalkoxylierungsprodukte von langkettigen Fettsäuren und geeigneten Phenolen.

Die erfindungsgemäß eingesetzten ausgewählten Emulgatoren sind kommerziell erhältlich. Unter Polyalkoholalkylcarbonsäureestern sind solche Ester aus Polyalkoholen und Alkylcarbonsäuren zu verstehen, deren Polyalkohole 3 bis 8 Hydroxylgruppen enthalten und deren Kohlenstoffkette gerade, verzweigt oder cyclisch angeordnet sein kann. Die Alkylcarbonsäureester enthalten im allgemeinen langkettige Carbonsäuren, vorzugsweise werden Carbonsäureester mit Carbonsäurekettenlängen von 8 bis 18 Kohlenstoffatomen im Alkylrest, der auch C-C-Mehrfachbindungen enthalten kann, eingesetzt. Beispiele für solche Polyalkoholalkylcarbonsäureester sind Ester aus Alkoholen, wie z. B. Glycerin, Sorbitan, Pentaerythrit oder Neopentylalkohol, mit langkettigen Carbonsäuren. Solche Polyalkoholalkylcarbonsäureester können eine oder mehrere Alkoholgruppe(n) verestert enthalten. Beispiele hierfür sind Sorbitamonolaurat, Sorbitanmonopalmitat, Sorbitanmonostearat oder Sorbitanmonooleat oder beispielsweise ein Pentaerythritfettsäureester oder allgemein Ester höherer Fettsäuren mit Hexosen oder Pentosen.

Eine weitere Klasse geeigneter nichtionischer Emulgatoren stellen Polysiloxanpolyoxyalkylen-Blockcopolymere dar. Diese Polysiloxanpolyoxyalkylen-Blockcopolymeren sind entweder nach dem Schema zusammengesetzt, daß an einer Polysiloxankette mit Trimethylsilylendgruppen einige oder alle Siliciumatome neben einer Methyl- eine Alkoxygruppe tragen, an die weitere Alkoxygruppen angelagert sind, deren Enden wiederum acyliert sind. Diese Art erfindungsgemäß eingesetzter Emulgatoren wird durch die nachfolgende Formel beschrieben :

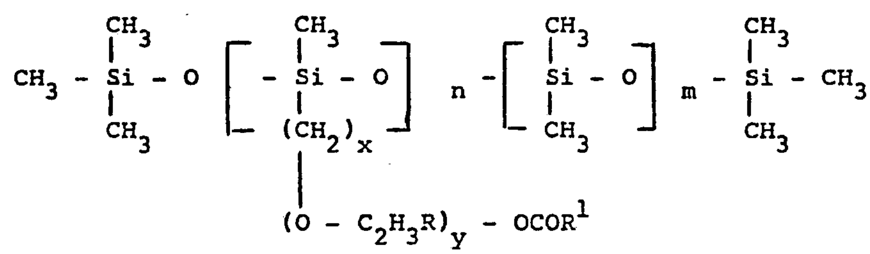

Für die Polysiloxanpolyoxyalkylen-Blockcopolymerisate bietet sich ein weiteres Aufbauschema an. In einer Kette sind Blöcke von Siloxan- und Alkoxyeinheiten aneinandergereiht, was formelmäßig folgendermaßen wiedergegeben wird :

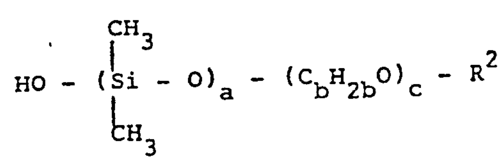

In diesen Formeln bedeuten

$n + m = 1$ bis 20, m kann 0 sein

x = 2 bis 8
y = 5 bis 20
R und $R^1$ = Alkyl mit 1 bis 6 Kohlenstoffatomen
$R^2$ = Wasserstoff oder $[(CH_3)_2SiO]_aR^3$
$R^3$ = H oder $C_bH_{2b}OR^2$
a = 5 bis 200
b = 2 bis 4
c = 1 bis 50.

Geeignet sind weiterhin nichtionische Emulgatoren, deren hydrophile Gruppe eine Polyalkoxykette ist, d. h. Alkoxylierungsprodukte langkettiger Fettsäuren oder geeigneter Phenole, z. B. Polyoxyäthylennonylphenol.

Die nichtionischen Emulgatoren werden im allgemeinen in Mengen von 0,01 bis 0,3 Gew.-%, bezogen auf Monomere, eingesetzt.

Gegebenenfalls können dem Polymerisationsansatz auch Alkalisalze anorganischer Säuren und/oder der Essigsäure in den üblichen Mengen, im allgemeinen von 0,01 bis 1 Gew.-%, bezogen auf Monomere, zugesetzt werden.

Als Alkalisalze kommen insbesondere Natrium- und Kaliumsalze und/oder der Essigsäure solcher anorganischen Säuren in Frage, die mindestens eine Säurekonstante $pK_a$ von nicht unter 4 besitzen. Beispiele für solche Salze sind die tertiären und sekundären Phosphate, die Pyrophosphate, die Acetate die Borate und die Hydrogencarbonate des Natriums und des Kaliums.

Der pH-Wert der wässrigen Dispersion liegt bei der Polymerisation zwischen 3 und 8, gegebenenfalls kann der Zusatz der vorstehend genannten Salze zur Regelung des pH-Wertes dienen.

Die Temperatur des Polymerisationsansatzes wird vorteilhafter Weise im Bereich von 40 bis 70 °C gehalten, und der Druck im Reaktor wird bei der jeweiligen Temperatur auf einem Wert gehalten, der höchstens dem Dampfdruck des Vinylchlorids bei dieser Temperatur entspricht.

Während der Polymerisation muß die wässrige Dispersion, wie in der Suspensionspolymerisation allgemein üblich, ständig gerührt werden, um ein vorzeitiges Absetzen der organischen Phase von der wässrigen zu verhindern. Es hat sich dabei gezeigt, daß bei einer Rührerumfangsgeschwindigkeit von höchstens 7,4 m/s Polymerisate mit besonders hohem Schüttgewicht, guter Rieselfähigkeit und guter Verarbeitbarkeit erhalten werden können. Während der Polymerisation kann die Rührgeschwindigkeit konstant gehalten oder verändert werden. Hierbei muß die Umfangsgeschwindigkeit des Rührers nicht während der gesamten Polymerisationsdauer unter der genannten Grenze liegen, sie sollte aber die überwiegende Zeit im angegebenen Bereich liegen. Das Verhältnis von Rührerdurchmesser zu Autoklavendurchmesser liegt im üblichen Bereich von 0,3 bis 0,8.

Es ist selbstverständlich möglich, weitere übliche Zusatzstoffe mitzuverwenden, z. B. Substanzen zur Verhinderung von Wandanlage wie Natriumnitrit oder monomere oder polymere (Poly-) Hydroxycarbonsäure, z. B. Polymerisationsregler wie chlorierte Kohlenwasserstoffe oder Aldehyde.

Die Erfindung ist nicht nur für Vinylchlorid-Homopolymere, sondern auch für Mischpolymerisate des Vinylchlorids bis zu 25 Gew.-%, vorzugsweise bis zu 5 Gew.-%, anderen äthylenisch ungesättigten Verbindungen geeignet. Als solche anderen äthylenisch ungesättigten Verbindungen sind alle radikalisch mit Vinylchlorid copolymerisierbaren Monomeren geeignet. Beispiele hierfür sind Vinylidenchlorid, Vinylfluorid, Vinylidenfluorid, Vinylester von geradkettigen oder verzweigten, insbesondere gesättigten Carbonsäuren mit 2 bis 20 Kohlenstoffatomen wie Vinylacetat, Vinylpropionat, Vinylbutyrat, Vinyläther, Ester ungesättigter Säuren wie der Acryl-, der Methacryl-, der Malein-, der Fumar- und der Itaconsäure, Alpha-Olefine wie Ethylen, Propylen, Isobutylen, Acryl- und Methacrylnitril.

Es ist natürlich möglich, neben den vorstehend genannten Monomergemischen auch die anderen genannten Polymerisationszusätze wie Emulgatoren, Initiatoren usw. jeweils als Gemische zu verwenden, soweit Menge und Eigenschaften der Gemische in den angegebenen Bereichen liegen.

Das Reaktionsgemisch kann erst unmittelbar vor Einsetzen der Polymerisation dispergiert werden, oder aber die einzelnen Komponenten können bereits unter Rühren zugesetzt werden.

Das Monomer/Wasserverhältnis ist nicht von entscheidender Bedeutung, in der Regel beträgt der Anteil an Monomeren zwischen 10 und 60 Gew.-% der Gesamtmenge von Wasser und Monomeren.

Es ist für das erfindungsgemäße Verfahren auch nicht entscheidend, in welcher Reihenfolge die einzelnen Bestandteile vor Beginn der Polymerisation in das Reaktionsgefäß gegeben werden. Es ist möglich, die Gesamtmengen der einzelnen Komponenten im Reaktionsgefäß vorzulegen oder aber alle oder einzelne Komponenten ganz oder teilweise erst während der Polymerisation zu dosieren.

Es wurde nun außerdem gefunden, daß sich die erfindungsgemäß hergestellten Polymerisate nicht nur zur Herstellung von harten Formkörpern eignen, sondern daß sie überraschender Weise auch als Pastenverschnittharze verwendet werden können und dabei die Aufgabe solcher Verschnittharze, die Viskosität von pastenförmigen Polymerisaten bei gutem Kältebruchverhalten zu regeln, in hervorragenderweise erfüllen. Für diesen Verwendungszweck hat sich als vorteilhaft erwiesen, daß die Teilchengröße des Reaktionsproduktes durch das erfindungsgemäße Verfahren so gesteuert werden kann, daß der Großteil der Teilchen ein Größe von höchstens 60 Mikrometern besitzt.

Die folgenden Beispiele sollen die Erfindung weiter erläutern.

Beispiel 1

In einem Polymerisationsautoklaven werden vorgelegt:

6 500 Gewichtsteile entionisiertes Wasser
4 000 Gewichtsteile Vinylchlorid
1,2 Gewichtsteile Natriumcarbonat
1,5 Gewichtsteile Dilauroylperoxid
1,6 Gewichtsteile Dicetylperoxydicarbonat
25 Gewichtsteile Polyvinylalkohol

mit einem durchschnittlichen molaren Gehalt an Restacetatgruppen von 17,5 Mol.-%, entsprechend einer mittleren Verseifungszahl von 200 mg KOH/g Vinylalkohol und eine Viskosität von 25 mPas, gemessen in 4 Gew.-%iger wässriger Lösung bei 20 °C nach Höppler.

Das vorgelegte Gemisch wird nun unter Rühren mit einer Umfangsgeschwindigkeit von 7,3 m/s langsam erwärmt, bis die Polymerisationsreaktion einsetzt. Die Polymerisationstemperatur wird auf etwa 58,5 °C gehalten. Die Reaktion ist ist nach 9 bis 10 Stunden beendet und nach dem Trocknen wird ein Produkt erhalten, dessen Schüttgewicht in Tabelle 1 angeführt ist.

Beispiel 2

In einem Polymerisationsautoklaven werden vorgelegt:

6 200 Gewichtsteile entionisiertes Wasser
4 000 Gewichtsteile Vinylchlorid
1,2 Gewichtsteile Natriumbicarbonat
1,7 Gewichtsteile Dilauroylperoxid
1,38 Gewichtsteile Dicetylperoxydicarbonat
20 Gewichtsteile Polyvinylalkohol

mit einem mittleren molaren Gehalt an Restacetatgruppen von 12,5 %, entsprechend einer mittleren Verseifungszahl von 140 mg KOH/g Polyvinylalkohol und einer Viskosität von 40 mPas, gemessen in 4 Gew.-%iger wässriger Lösung bei 20 °C nach Höppler.

3 Gewichtsteile Sorbitan-monolaurat.

Das vorgelegte Gemisch wird nun in der in Beispiel 1 genannten Weise polymerisiert. Das Schüttgewicht des erhaltenen Produktes ist in Tabelle 1 angeführt.

Beispiel 3

Beispiel 2 wird wiederholt mit folgenden Abänderungen:

Es werden 20,5 Gewichtsteile des teilweise verseiften Polyvinylacetats, 2 Gewichtsteile des Sorbitan-monolaurats, 1,6 Gewichtsteile Lauroylperoxid und 1,3 Gewichtsteile Dicetylperoxydicarbonat eingesetzt. Das Schüttgewicht des erhaltenen Polyvinylchlorids ist ebenfalls in Tabelle 1 wiedergegeben.

Beispiel 4

Beispiel 2 wird wiederholt, wobei jedoch 1,6 Gewichtsteile Lauroylperoxid und 1,3 Gewichtsteile Dicetylperoxydicarbonat sowie 2 Gewichtsteile Sorbitan-monostearat anstelle des Sorbitan-monolaurats eingesetzt werden. Das Schüttgewicht des Polymerisats ist ebenfalls in Tabelle 1 aufgeführt.

Beispiel 5

Beispiel 2 wurde wiederholt mit folgenden Abänderungen:

Es wurden 1,6 Gewichtsteile Dilauroylperoxid, 1,3 Gewichtsteile Dicetylperoxydicarbonat, 20,5 Gewichtsteile des teilverseiften Polyvinylacetats aus Beispiel 1 und statt des Sorbitan-Esters 2 Gewichtsteile eines Polysiloxanpolyoxyalkylen-Blockcopolymeren L 050 (Handelsprodukt der Firma Wacker-Chemie GmbH, München), eines modifizierten Dimethylsiloxan-Blockcopolymeren mit alternierenden Silicium-Sauerstoff- und Kohlenstoff-Sauerstoff-Einheiten in der Kette, mit 50 % Siloxan-Einheiten und einer Viskosität von 250 ± 50 $mm^2/s$, eingesetzt.

Das Schüttgewicht des erhaltenen Produktes ist ebenfalls in Tabelle 1 angegeben.

Beispiel 6

Beispiel 2 wurde wiederholt mit folgenden Abänderungen:

Es wurden 1,6 Gewichtsteile Dilauroylperoxid, 1,3 Gewichtsteile Dicetylperoxydicarbonat, 20,5 Gewichtsteile des teilweise verseiften Polyvinylacetats aus Beispiel 1 und statt des Sorbitan-Esters 2 Gewichtsteile eines Polysiloxanpolyoxyalkylen-Blockcopolymeren L 03 (Handelsprodukt der Firma Wacker-Chemie GmbH, München), eines modifizierten Methylsiloxan-Blockcopolymeren mit einer einheitlichen Siloxankette, mit 16 % Siloxan-Einheiten und einer Viskosität von 150 ± 50 $mm^2/s$, verwendet.

Das Schüttgewicht des erhaltenen Polymeren ist ebenfalls in Tabelle 1 aufgeführt.

Tabelle 1

Schüttgewichte des Polymerisate der Beispiele 1-6 nach DIN 53 194 (Deutsche Industrie-Norm)

| Beispiel | Schüttgewicht ($g/cm^3$) |
|---|---|
| 1 | 0,681 |
| 2 | 0,648 |
| 3 | 0,656 |
| 4 | 0,663 |
| 5 | 0,684 |
| 6 | 0,667 |

Beispiel 7

Aus 50 Gewichtsteilen eines handelsüblichen Polyvinylchlorids zur Pastenherstellung (Vinnol(R) P 70, Wacker-Chemie GmbH, München) und 50 Gewichtsteilen Dioctylphthalat wurde unter Zusatz*) des zu untersuchenden Polyvinylchlorids aus den Beispielen 1 bis 6 und zum Vergleich unter Zusatz*) eines mit Methylhydroxypropylcellulose als Schutzkolloid hergestellten Polyvinylchlorids (nach DE-PS 16 45 668) Pasten im Planetenmischer angerührt, in ein 600 ml-Becherglas gefüllt und bei 25 °C temperiert. Nach 4 Stunden wurde die Viskosität mit dem Brookfield-Viskosimeter bestimmt. Als Meßgerät diente das Modell RVT, gemessen wurde mit den LV-bzw. RV-Spindeln, und zwar bei 1 $min^{-1}$ und 20 $min^{-1}$ (Umdrehungen pro Minute). Die Mittelwerte aus je 2 Messungen sind in Tabelle 2 aufgeführt.

*) von 50 Gewichtsteilen

Tabelle 2

| Pastenverschnitt-komponente aus den Beispielen | Viskosität (mPas) 1 $min^{-1}$ | 20 $min^{-1}$ |
|---|---|---|
| 1 | 3 300 | 2 710 |
| 2 | 3 200 | 2 520 |
| 3 | 2 970 | 2 420 |
| 4 | 3 480 | 2 735 |
| 5 | 3 045 | 2 590 |
| 6 | 3 120 | 2 580 |
| Vergleichsversuch | 3 420 | 2 525 |

Beispiel 8

Aus den Pasten des Beispiels 7 wurden zur Bestimmung der Kältebruch-Temperatur nach DIN 53 372 durch 5-minütiges Gelieren bei 180 °C jeweils 0,3 mm-Filme hergestellt. Die Kältebruchtemperaturen dieser Filme sind in Tabelle 3 angegeben.

Tabelle 3

Kältebruchtemperaturen von Filmen, hergestellt mit den Polymerisaten der Beispiele 1-6 und mit Polyvinylchlorid, hergestellt in Gegenwart von Methylhydroxypropylcellulose (Mittelwerte aus 2 Messungen).

| Beispiel | Kältebruchtemperatur (°C) |
|---|---|
| 1 | − 4 |
| 2 | − 6 |
| 3 | − 8 |
| 4 | − 3,5 |

| | |
|---|---|
| 5 | − 6,5 |
| 6 | − 6 |
| Vergleichsversuch | + 13,5 |

Die viskositätserniedrigende Wirkung bzw. die resultierende Viskosität der damit hergestellten Pasten ist bei den Polyvinylchlorid-Harzen der Beispiele 1 bis 6 und des Vergleichsversuchs miteinander vergleichbar, jedoch zeigt sich, wie in Beispiel 8 ausgeführt, ein überlegenes Kältebruchverhalten der mit den erfindungsgemäß hergestellten Pastenverschnittharzen hergestellten Pasten.

## Ansprüche

1. Verfahren zur Herstellung von Polyvinylchlorid hoher Schüttdichte nach dem Suspensionspolymerisations-Verfahren in Gegenwart von Radikalinitiator und Schutzkolloid unter höchstens autogenem Vinylchloriddruck im Autoklaven bei pH-Werten zwischen 3 und 8 unter Rühren und bei Temperaturen von 40 bis 70 °C gegebenenfalls in Gegenwart von Alkalisalzen und gegebenenfalls in Gegenwart weiterer üblicher Zusatzstoffe wie Emulgatoren, dadurch gekennzeichnet, daß Vinylchlorid

a) in Gegenwart von 0,01 bis 0,3 Gew.-% monomerlöslichem Radikalinitiator,

b) in Gegenwart von 0,05 bis 1 Gew.-% wasserlöslichem Polyvinylalkohol mit einem Hydrolysegrad von 80 bis 90 Mol % und einer Viskosität von 15 bis 50 mPas, gemessen in 4 Gew.-%iger wässriger Lösung bei 20 °C mit dem Höppler-Kugelfallviskosimeter, wobei die genannten Mengen sich auf das Gewicht an eingesetztem Monomeren beziehen, und bei einer Rührerumfangsgeschwindigkeit von höchstens 7,4 m/s polymerisiert wird.

2. Verfahren nach Anspruch 1, dadurch gekennzeichnet, daß zusätzlich in Gegenwart von 0,01 bis 0,3 Gew.-%, bezogen auf Monomere, eines nicht-ionischen Emulgators polymerisiert wird.

3. Verfahren nach Anspruch 2, dadurch gekennzeichnet, daß der nichtionische Emulgator ein Alkylcarbonsäureester eines cyclischen, gerad- oder verzweigtkettigem Polyalkohols mit 3 bis 8 Hydroxygruppen ist, wobei der Alkylrest der Carbonsäure 8 bis 18 Kohlenstoffatome besitzt.

4. Verfahren nach Anspruch 2, dadurch gekennzeichnet, daß der nichtionische Emulgator ein Polysiloxanpolyoxyalkylen-Blockcopolymeres folgenden allgemeinen Aufbauschemas ist :

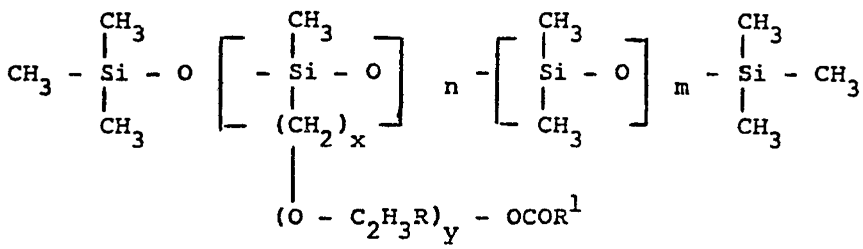

oder

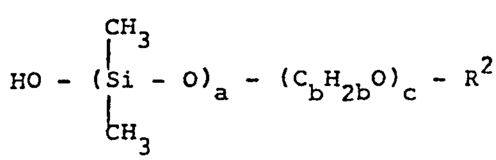

wobei bedeuten :

n + m = 1 bis 20, m kann o sein
x = 2 bis 8
y = 5 bis 20
R und $R^1$ = Alkyl mit 1 bis 6 Kohlenstoffatomen
$R^2$ = Wasserstoff oder $[(CH_3)_2SiO]_aR^3$
$R^3$ = H oder $C_bH_{2b}OR^2$
a = 5 bis 200
b = 2 bis 4
c = 1 bis 50

5. Verfahren nach Anspruch 2, dadurch gekennzeichnet, daß der nichtionische Emulgator ein Alkoxyalkylierungsprodukt einer langkettigen Fettsäure oder eines geeigneten Phenols ist.

6. Verfahren nach einem der vorangehenden Ansprüche, dadurch gekennzeichnet, daß Alkalisalze anorganischer Säuren und/oder der Essigsäure in üblichen Mengen zugesetzt werden.

7. Verwendung des nach dem Verfahren gemäß einem der Ansprüche 1 bis 6 hergestellten Polyvinylchlorids zur Herstellung von harten Formkörpern.

8. Verwendung des nach dem Verfahren gemäß einem der Ansprüche 1 bis 6 hergestellten Polyvinylchlorids als Pastenverschnittharz.

**Claims**

1. Process for the production of polyvinyl chloride of high apparent density according to the suspension polymerization process in the presence of a free-radical initiator and a protective colloid under maximally autogeneous vinyl chloride pressure in the autoclave, at pH values of between 3 and 8, while stirring at a temperature of from 40° to 70 °C, optionally in the presence of alkali metal salts and optionally other customary auxiliaries, such as emulsifiers, characterized in that vinyl chloride is polymerized

a) in the presence of from 0.01 % to 0.3 % by weight of a monomer-soluble free-radical initiator,

b) in the presence of from 0.05 % to 1 % by weight of a water-soluble polyvinyl alcohol having a hydrolysis degree of from 80 to 90 mole-% and a viscosity of from 15 to 50 mPas, measured in a 4 % by weight aqueous solution at 20 °C with a Höppler falling-ball viscosimeter, wherein the indicated amounts are based on the weight of the monomer used, and at a peripheral speed of the stirring mechanism of not more than 7.4 m/s.

2. Process according to claim 1, characterized in that additionally the polymerization is carried out in the presence of from 0.01 % to 0.3 % by weight, based on the weight of the monomer, of a non-ionic emulsifier.

3. Process according to claim 2, characterized in that said non-ionic emulsifier is an alkyl carboxylic acid ester of a cyclic, branched or straight-chain poly alcohol having from 3 to 8 hydroxy groups, wherein the alkyl radical of the carboxylic acid has from 8 to 18 carbon atoms.

4. Process according to claim 2, characterized in that said non-ionic emulsifier is a polysiloxane-polyoxyalkylene block copolymer of the following general structure :

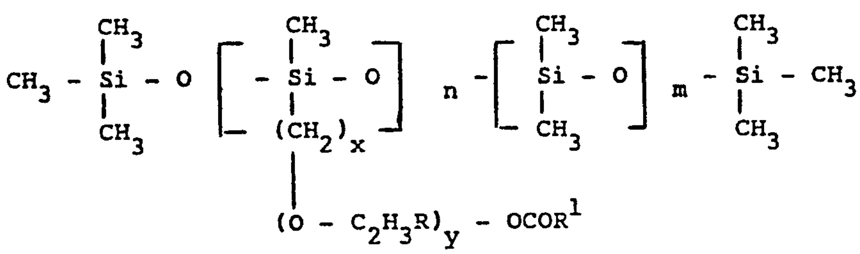

or

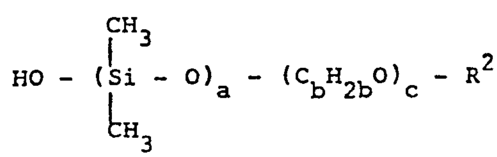

in which

$n + m = 1$ to 20, m may be 0,
$x = 2$ to 8,
$y = 5$ to 20,
R and $R^1$ = alkyl having from 1 to 6 carbon atoms,
$R^2$ = hydrogen or $[(CH_3)_2SiO]_aR^3$,
$R^3$ = H or $C_bH_{2b}OR^2$,
$a = 5$ to 200,
$b = 2$ to 4, and
$c = 1$ to 50.

5. Process according to claim 2, characterized in that said non-ionic emulsifier is an alkoxyalkylation product of a long-chain fatty acid or an appropriate phenol.

6. Process according to anyone of the foregoing claims, characterized in that alkali salts of inorganic acids and/or acetic acid are added in customary amounts.

7. Use of the polyvinyl chloride produced according to anyone of claims 1 to 6 for the production of hard shaped articles.

8. Use of the polyvinyl chloride produced according to anyone of claims 1 to 6 for the production of paste cut resin.

## Revendications

1. Procédé de production de chlorure de polyvinyle à grande masse volumique apparente, selon le procédé de polymérisation en suspension en présence d'un amorceur radicalaire et d'un colloïde protecteur sous une pression de chlorure de vinyle au maximum égale à la pression autogène dans des autoclaves à des pH compris entre 3 et 8 sous agitation et à des températures de 40 à 70 °C, éventuellement en présence de sels alcalins et éventuellement en présence d'autres additifs usuels comme des émulsifiants, procédé caractérisé en ce qu'on polymérise le chlorure de vinyle

a) en présence de 0,01 à 0,3 % en poids d'un amorceur de radicaux solubles dans le monomère,

b) en présence de 0,05 à 1 % en poids d'un alcool polyvinylique hydrosoluble présentant un degré d'hydrolyse de 80 à 90 moles % et une viscosité de 15 à 50 mPas (mesurée dans le cas d'une solution aqueuse à 4 % en poids à 20 °C à l'aide d'un viscosimètre Höppler à chute de bille), les quantités totales étant rapportées au poids des monomères utilisés, et à une vitesse périphérique de l'agitateur qui est au maximum de 7,4 m/sec.

2. Procédé selon la revendication 1, caractérisé en ce qu'on polymérise en outre en présence de 0,01 à 0,3 % en poids, par rapport au monomère, d'un émulsifiant non ionique.

3. Procédé selon la revendication 2, caractérisé en ce que l'émulsifiant non ionique est un ester d'acide alkylcarboxylique et d'un polyalcool cyclique, linéaire ou ramifié comportant trois à huit groupes hydroxyles, le radical alkyle de l'acide carboxylique comportant 8 à 18 atomes de carbone.

4. Procédé selon la revendication 2, caractérisé en ce que l'émulsifiant non ionique est un copolymère à blocs de polysiloxanes et de polyoxyalkylènes présentant la structure schématique générale suivante :

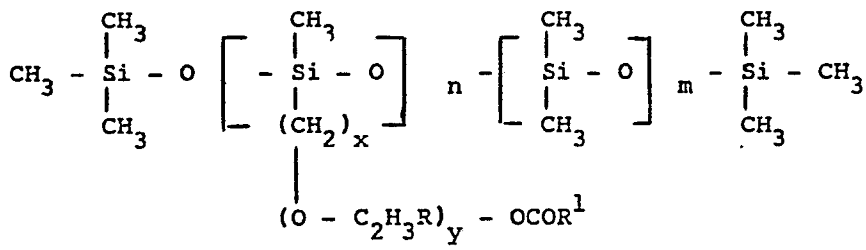

ou

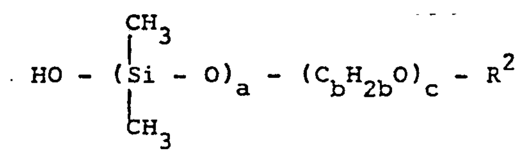

dans lesquelles

la somme n + m vaut 1 à 20, m pouvant être nul
x vaut 2 à 8
y vaut 5 à 20
R et $R^1$ représentent chacun un groupe alkyle ayant 1 à 6 atomes de carbone
$R^2$ est un atome d'hydrogène ou $[(CH_3)_2SiO]_aR^3$
$R^3$ représente H ou $C_bH_{2b}OR^2$
a vaut 5 à 200
b vaut 2 à 4 et
c vaut 1 à 50.

5. Procédé selon la revendication 2, caractérisé en ce que l'émulsifiant non ionique est un produit d'alcoxy-alkylation d'un acide gras à longue chaîne ou d'un phénol convenable.

6. Procédé selon l'une quelconque des revendications précédentes, caractérisé en ce que l'on ajoute en des quantités usuelles des sels alcalins d'acides minéraux et/ou de l'acide acétique.

7. Utilisation du chlorure de polyvinyle, produit selon le procédé selon l'une quelconque des revendications 1 à 6, pour produire des objets façonnés ou moulés durs.

8. Utilisation du chlorure de polyvinyle produit selon le procédé selon l'une quelconque des revendications 1 à 6 comme résines d'allongement de pâtes.